# EUROPEAN PATENT SPECIFICATION

(11) **EP 2 691 910 B1**
(45) Date of publication and mention of the grant of the patent: **09.07.2014**
(21) Application number: 13702064.0
(22) Date of filing: 01.02.2013
(51) Int. Cl.: G06F 21/45, G06F 21/31, H04L 29/08, H04L 29/06

(54) **AUTHENTICATION IN AN INDUSTRIAL CONTROL SYSTEM**
AUTHENTIFIZIERUNG IN EINEM INDUSTRIEELLEN REGELSYSTEM
AUTHENTIFICATION DANS UN SYSTÈME DE COMMANDE INDUSTRIELLE

(30) Priority: 09.03.2012 EP 12158697
(43) Date of publication of application: 05.02.2014
(73) Proprietor: ABB Research Ltd., 8050 Zürich (CH)
(72) Inventor: OBERMEIER, Sebastian, CH-5107 Schinznach-Dorf (CH); SCHIERHOLZ, Ragnar, CH-5436 Würenlos (CH); HRISTOVA, Ana, CH-5400 Baden (CH); HADELI, Hadeli, CH-5400 Baden (CH)
(74) Representative: ABB Patent Attorneys
(86) International application number: PCT/EP2013/052085
(87) International publication number: WO 2013/131694

(56) References cited:
- EP-A2- 1 587 007
- WO-A1-99/13393
- James Andrews: "Distribute /etc/passwd among several machines securely", , 26 October 1999 (1999-10-26), pages 1-1, XP055032417, Retrieved from the Internet: URL:http://web.archive.org/web/20101112092 017/http://www.linuxplanet.com/linuxplanet /tips/1142/1 [retrieved on 2012-07-11]
- "rsync", , 27 February 2012 (2012-02-27), pages 1-6, XP055032419, Retrieved from the Internet: URL:http://en.wikipedia.org/w/index.php?ti tle=Rsync&oldid=479116076 [retrieved on 2012-07-11]
- Andrew Tridgell: "rsync(1)", , 12 July 2006 (2006-07-12), pages 1-33, XP055032454, Retrieved from the Internet: URL:http://sunsite.ualberta.ca/Documentati on/Misc/rsync-2.6.6/rsync.1.html [retrieved on 2012-07-11]
- Nicolas Bareil: "HOWTO authenticate ssh server through certificates", , 6 July 2011 (2011-07-06), pages 1-3, XP055032423, Retrieved from the Internet: URL:http://justanothergeek.chdir.org/2011/ 07/howto-authenticate-ssh-server-through.h tml [retrieved on 2012-07-11]

## Description

### FIELD OF THE INVENTION

The invention relates to a method, a computer program and a computer-readable medium for synchronizing user authentication data in an industrial control system. The invention further relates to a controller of an industrial control system and an industrial control system.

### BACKGROUND OF THE INVENTION

Industrial control systems may comprise a plurality of controllers that may be interconnected by a communication network. The controllers may be used for controlling equipment of an industrial plant, for example robots, or equipment of a power plant or a substation.

A solution for authentication in an industrial control system is to use a password mechanism, i.e., a user supplies his password when he requires interaction with the respective controller.

The major problem when using passwords for controllers is that there usually is no coordination and synchronization between the user credentials at each of the controllers. Therefore, users have to define a password for each controller separately. In the case of a high number of controllers, this may leads to a nearly unmanageable amount of different user/password combinations.

While methods for synchronizing password files for example via rsync are known, see http://web.archive.org/web/20101112092017/http://www.linuxplanet.com/linuxplanet/tips/1 142/1, there is a lack of a solution adapted to industrial control systems.

### DESCRIPTION OF THE INVENTION

An alternative approach uses (software) certificates, which bind a secret private key and a corresponding public key to a user. Certificates may be issued by a central trusted third party, i.e. a certificate authority. A controller knowing the public key of the certificate authority can authenticate the sender of the certificate. However, in an industrial control system, the user needs a secure way to present such a certificate to the controller, which may be not trivial when access to the controller is performed via local front-panel interfaces, for example a keypad or a touchscreen.

In enterprise IT system it is known to use central, dedicated authentication servers. A user who supplies a password for a device is first transparently redirected to the authentication server, and if this server confirms the validity of the password, the user can access the device. However, when the authentication server or the connection to the authentication server fails, there is no guarantee that a user still has access to the device. This drawback may be acceptable in enterprise environments, as each individual device may cache the user credentials, once a user has accessed the device, and a user requires access to a limited set of devices.

In industrial control systems, which may comprise thousands of different controllers, however, users usually have to access the controllers not that frequently; usually the controllers are only accessed for re-configuration or in case of failure or emergency and therefore relying on cashing is not suitable.

In addition, relying on a centralized authentication server for authentication and authorization may impose additional costs and risks in the industrial control system, since an additional server may mean that additional resources may have to be allocated, such as dedicated personnel for maintenance, patching, audit log review, licensing fees for the operating system and the applications on it, vendor support etc.

Thus, it is an object of the invention to simplify authentication of users in an industrial control system.

This object is achieved by the subject-matter of the independent claims. Further exemplary embodiments are evident from the dependent claims and the following description.

A first aspect of the invention relates to a method for synchronizing user authentication data in an industrial control system.

According to an embodiment of the invention, the method comprises the steps of: calculating a first hash or equivalent short descriptor of user authentication data stored in a first controller; broadcasting the first hash to a plurality of second controllers in regular intervals; comparing the first hash with a second hash of user authentication data stored in a second controller; and in case the first hash differs from the second hash, updating user authentication data having an earlier timestamp with user authentication data having a later timestamp.

In the context of the present invention, the term hash does not necessarily refer to a cryptographic hash, but to any suitable short descriptor that reflects the content of a complete user authentication database. If that database is changed, the descriptor is required to reflect such change. While a cryptographic hash is a preferred exemplary descriptor, a checksum may also be suitable. Whenever new user account data is created or modified in a controller, these changes only need to be performed in one controller. After the changes have been broadcasted to all other controllers, the changed user account data, for example a changed password, is valid for all controllers of the industrial control system.

Further aspects of the invention relate to a computer program, which, when being executed by a processor, is adapted to carry out the steps of the method as described in the above and in the following, and a computer-readable medium, in which such a computer program is stored.

A computer-readable medium may be a floppy disk, a hard disk, an USB (Universal Serial Bus) storage device, a RAM (Random Access Memory), a ROM (Read Only memory), an EPROM (Erasable Programmable Read Only Memory) or a FLASH memory. A computer readable medium may also be a data communication network, e.g. the Internet, which allows downloading a program code.

A further aspect of the invention relates to a controller of an industrial control system.

According to an embodiment of the invention, the controller is adapted for calculating a first hash or equivalent short descriptor of user authentication data stored in the controller; for receiving a second hash of user authentication data stored at a second controller; for comparing the first hash with the second hash; and for updating the user authentication data with the user authentication data from the second controller, when a timestamp of the user authentication data of the controller is earlier than a timestamp of the user authentication data of the second controller.

Each controller of the industrial control system may become a part of an overall authentication system. Each controller may perform authentication services independently from the rest of the industrial control system. Furthermore, a controller may perform the authentication task on behalf of other participating devices of the industrial control system, which may not meet the performance and storage requirements for implementing this feature and have delegated the authentication task.

Users, who have not accessed a controller before but are authorized to do so, may be able to access the controller even in case of network outage.

A further aspect of the invention relates to an industrial control system, which comprises a plurality of such controllers and a communication network interconnecting the plurality of controllers.

It has to be understood that features of the method as described in the above and in the following may be features of the controller and the system as described in the above and in the following and vice versa.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a controller according to an embodiment of the invention.
Fig. 2 schematically shows an industrial control system according to an embodiment of the invention.
Fig. 3 shows a flow diagram, for a method for installing and accessing an industrial control system according to an embodiment of the invention.
Fig. 4 schematically shows an industrial control system according to an embodiment of the invention.
Fig. 5 shows a flow diagram, for a method for synchronizing user authentication data in an industrial control system according to an embodiment of the invention.
Fig. 6 shows a flow diagram, for a further method for synchronizing user authentication data in an industrial control system according to an embodiment of the invention.

In principle, identical parts are provided with the same reference symbols in the figures.

### DETAILED DESCRIPTION OF EXEMPLARY EMBODIMENTS

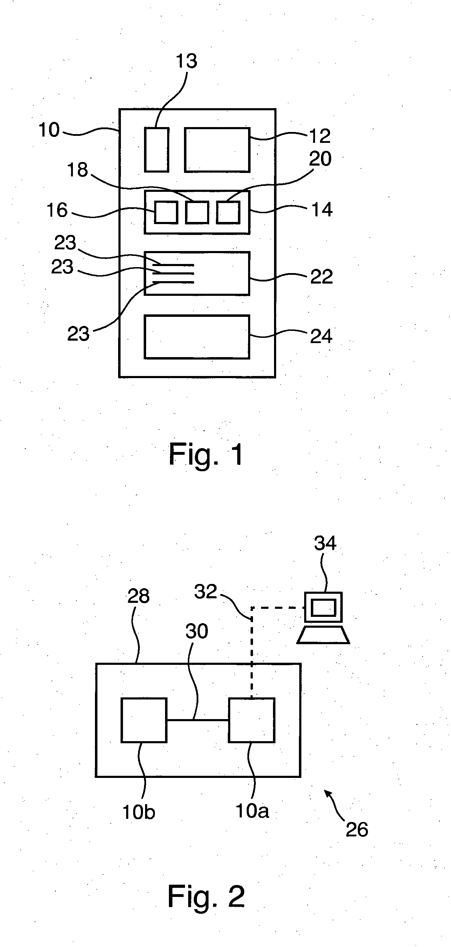

Fig.1 shows a controller 10 for an industrial control system. The controller 10 may be a robot controller or an industrial embedded device such as a PLC (programmable logic controller).

The controller 10 comprises a computer-readable medium 12 containing a software module for authentication, including libraries with implementations of standard cryptographic algorithms for encryption and hashing. The software module may be executed on a microprocessor 13, thus enabling the controller 10 to perform the methods as will be explained in the following.

The controller 10 further comprises a first memory region 14, in which a device certificate 16, a private key 18 and a root certificate is stored.

The device certificate 16 is signed by a certificate authority, stating the identity of the controller 10 (for example via the device ID), which is used to identify the controller 10 in its communication with other controllers 10 and users.

The private key 18 is used for decrypting sensitive traffic previously encrypted with the public key stored in the device certificate 16. The private key 18 may be stored in secure memory allowing to store the private key 18 in a confidential way, i.e., such that the private key 18 cannot be accessed by unauthorized persons.

The root certificate 20 allows verifying the validity of certificates issued by a certificate authority. In particular, the root certificate 20 may be used for verifying a device certificate 16 from another controller. The root certificate 20 may be issued by an independent certificate authority or by the owner/operator of the industrial control system, the controller 10 belongs to.

The controller 10 comprises a second memory region 22 with user authentication data 22. The user authentication data 22 may comprise an authentication table 22 or authentication database 22 that stores user accounts 23 with credentials and roles of users.

The authentication table 22 comprises at least one user account 23 and a hash value of the user account. Each user account 23 may comprise a username, a password, a set of roles and associated permissions, and a timestamp with a last modification time of the user account 23. The authentication table 22 comprises further a table hash.

Furthermore, the controller 10 comprises a local clock 24. The controller may have the capability to synchronize the local clock 24 with other components of the industrial control system, for example other controllers. The local clock 24 may be used by the controller 10 for time stamping the user accounts 23 and for triggering timer events.

Fig. 2 shows an industrial control system 26 in a plant 28. The industrial control system comprises two controllers 10a, 10b interconnected by a data communication network 30. Usually, an industrial control system may comprise a plurality of controllers 10a, 10b, for example thousands of controllers 10a, 10b.

Furthermore, a user at a workstation 34 may access the industrial control system 26 and in particular one of the controllers 10a via a data connection 32.

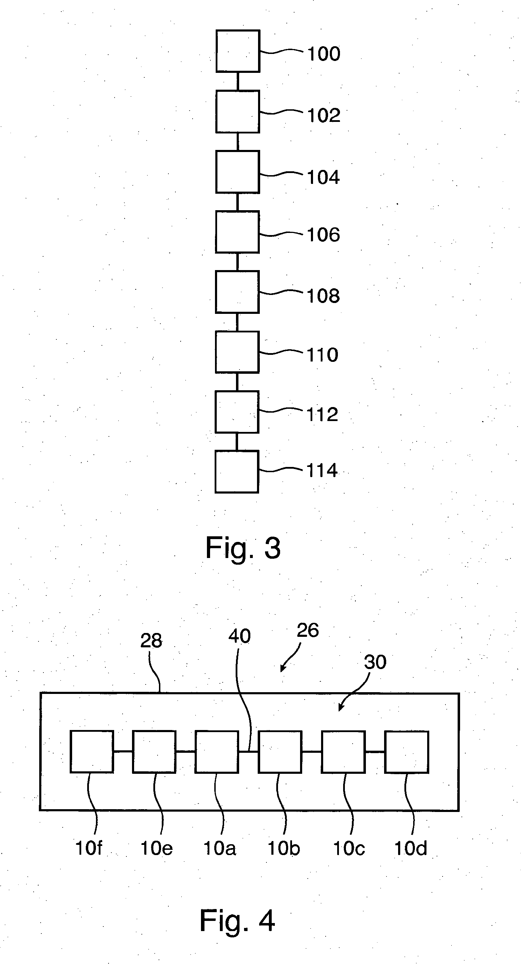

Fig. 3 shows a flow diagram for installing and accessing the industrial control system 26.

For example, before the controllers 10a; 10b are installed in the plant 28, in step 100, an admin account is setup in the controller 10a. The admin account may be a user account 23 comprising a username, a password and the admin role. Optionally further user accounts 23 are setup and added. For example, the user with the admin account (an administrator) may add further user accounts 23 to the authentication table 22.

In step 102.

In step 104, the first controller 10a is installed in the plant 28 and connected to the communication network 30.

In step 106, a user at the workstation 34 logs in the controller 10a via the external data connection 32. The device certificate 16 of the controller 10a may be verified with the root certificate stored in the workstation 34. After that, the user submits his username and password to the controller 10a.

In step 108, the controller 10a authenticates the user by verifying the username and the password with the aid of the authentication table 22. The controller determines the user role from the authentication table 22 and authorizes the user by determining permissions from the role. It has to be noted that the term "authentication" may refer to validating, whether a user or device is the user/device that it claims to be and the term "authorization" may refer to assigning roles and permission to a user/device. In step S108, the controller 10a does not have to access any other device or server via the data network 30. It can verify the user credentials by itself.

According to an embodiment of the invention, the controller 10a may be adapted for authentication of a user with user account data 22 stored in the controller 10a.

In step 110, the second controller 10b is installed in the plant 28 and connected with the network 30.

In step 112, when the controller 10b is turned on, the controller 10b and the controller 10a mutually authenticate each other, with the aid of their certificates 16, 20. After that the second controller 10b retrieves the content of the authentication table 22 of the first controller 10a and stores it in its authentication table 22.

According to an embodiment of the invention, the second controller 10b may retrieve user authentication data 22 from the first controller 10a, when the second controller 10b is connected to the industrial control system 26 for the first time. The retrieved user authentication data 22 may be stored in the second controller 10b.

In such a way, a user may log in the second controller 10b analogously as in the first controller 10a as explained with respect to steps 106, 108. It is further possible that the user logs into the controller 10b via a local front-panel, for example a keyboard or touchpad.

In the end, in step 114, both controllers 10a, 10b listens for authentication updates as will be explained with respect to the following figures.

It has to be noted that a user login and a management of user accounts 23 may be possible at any controller 10a, 10b of the industrial control system 28. For example, an administrator may log in via the data connection 32 and may modify or add user accounts 23 in the authentication table 22 of the controller 10a.

With the local clock 24 of the respective controller 10a, 10b, the modified or added user accounts 23 will be time stamped with the time of the change.

Due to the authentication updates (step 114) the modified and added user accounts 23 will be also updated in the second controller 10b.

Fig. 4 shows an industrial control system 26 comprising a plurality of controllers 10a, 10b, 10c, 10d, 10e, 10f. The controllers are linked via the communication network 30. For example, the industrial control system 26 has been installed by adding further controllers 10c, 10d, 10e, 10f to the industrial control system 26 shown in Fig. 2, which have generated their authentication tables analogously to the controller 10b in step 112.

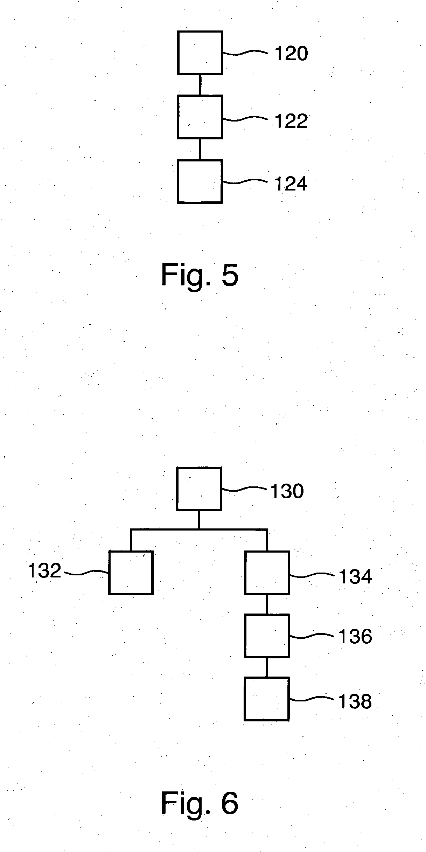

Fig. 5 shows a flow diagram for a method for periodically updating the authentication table 22, which may be performed by each controller 10a to 10f of the industrial control system 26. With the method, changes in the authentication table 22 of one of the controllers may be synchronized with the authentication tables 22 of the other controllers, i.e. within the complete industrial control system 26.

The method will be explained with respect to controllers 10a, 10b. However, every other pair of controllers may be substituted.

In step 120, after a modification of the authentication table 22, the controller 10a computes: a hash for each modified user account 23 and a table hash that may be a hash of all individual user account hashes or a hash of the complete authentication table 22.

According to an embodiment of the invention, a first hash of the user authentication data 22 may be calculated in the first controller 10a.

The following steps of the method may be executed periodically by the controller 10a. Furthermore, when a change of a user account 23 has occurred in the controllers 10a, the execution of the method may be triggered by the change.

In step 122, when user account data of the controller 10a has changed or when a clock event occurred, the controller 10a broadcasts the table hash to the other controllers and in particular to the controller 10b (as example).

According to an embodiment of the invention, the first hash may be broadcast to a plurality of second controllers 10a to 10f in regular intervals.

According to an embodiment of the invention, the first hash may be broadcast after a modification of user authentication data 22.

For example, the controller 10a may have a count-down timer. Whenever the count-down timer has expired, the controller 10a may broadcast its table hash over the network 30 and may reset its timer.

According to an embodiment of the invention, the first hash may be broadcast after the expiry of a timer in the first controller 10a.

In step 124, the receiving controller 10b first authenticates the sending controller 10a with the aid of its device certificate 16 and the root certificate 20.

According to an embodiment of the invention, the identity of the first controller 10a may be verified in the second controller 10b with a device certificate 16 stored in the first controller 10a that is sent to the second controller 10b.

The receiving controller 10b compares the received table hash with its own table hash. If it is the same, the authentication table 22 is up-to-date.

According to an embodiment of the invention, the first hash may be compared with a second hash of user authentication data 22 in a second controller 10b.

In the case the table hashes differ, the receiving controller 10b contacts the sending controller 10a and uses the individual user account hashes to determine the conflicting user account 23 and performs a conflict resolution based on the timestamp of the user account 23. Two conflicting entries for the same username are resolved by overwriting the entry with the earlier timestamp by the entry with the late timestamp.

According to an embodiment of the invention, in the case, the first hash differs from the second hash, user authentication data 23 with an earlier timestamp may be updated with user authentication data with a later timestamp.

According to an embodiment of the invention, the first controller 10a may be adapted for updating the user authentication data 23 with user authentication data 23 from the second controller 10b, when a timestamp of the user authentication data of the first controller 10a is earlier than a timestamp of the user authentication data of the second controller 10b.

According to an embodiment of the invention, the first controller 10a may be adapted for notifying the second controller 10b to update the user authentication data 22 of the second controller 10b, when the timestamp of the user authentication data 22 of the second controller 10b is earlier than the timestamp of the user authentication data 22 of the first controller 10a.

After that, the receiving controller 10b may reset its count-down timer, to reduce network traffic.

According to an embodiment of the invention, a timer in the second controller 10b may be reset, when the first hash has been received.

Fig. 6 shows a flow diagram for an example how the controllers 10a to 10f automatically interact with each other in order to synchronize the user accounts 23, when a user account changes.

In step 130, a user account 23 is added or modified in one of the controllers 10a to 10f, for example, in the controller 10a. However, user accounts 23 may be added at any controller 10a to 10f. Also, the modification of the user account details of an existing user may be performed at any controller 10a to 10f.

Now assume that the network 30 is complete working and all controllers 10a to 10f may communicate with each other. Then in step 132, the updated user account 23 is distributed to all other controllers via the network 30, which store the updated or modified user account 23 in their authentication table 22. In step 132, the steps 120 to 124 of Fig. 5 may be performed.

After step 132, all authentication tables 22 of all controllers 10a to 10f are updated.

Now assume that the network 30 is partly down, for example, the network link 40 is not working.

In step 134, the controller 10a broadcasts the update for the user account 23 to the controllers 10e and 10f, but is not able to reach the controllers 10b, 10c, 10d due to the network split by the network link 40. In step 134, the steps 120 to 124 of Fig. 5 may be performed.

Thus, after step 134 only the authentication tables 22 of the controllers 10a, 10e, 10f are updated.

In step 136, when (as an example) the device timer of the controller 10b has expired, the controller 10b broadcasts the table hash. In step 136, the steps 120 to 124 of Fig. 5 may be performed.

The controllers 10c, 10d that are able to receive the table hash compare this hash with their own hash and determine that they are up-to-date. For the controllers 10b, 10c, 10d, this is true as the user update from the controllers 10a; 10e, 10f cannot reach the devices 10b, 10c, 10d.

Thus, after step 136 the authentication tables 22 of the controllers 10b, 10c, 10d do not contain the changes of the authentication tables 22 of the controllers 10a, 10e, 10f.

Now assume that after a while, the network link 40 is operating again and the two part of the network 30 are united.

Then in step 138, when its device timer expires, one of the controllers 10a, 10e, 10f, for example the controller 10a, broadcasts the table hash, which is received by all devices in the network 30. In step 138, the steps 120 to 124 of Fig. 5 may be performed.

While the controllers 10a; 10e, 10f do not determine a change, the devices 10b, 10c, 10d start a conflict resolution. They identify a change and request the changed user accounts 23 from the respective controller 10a, 10e, 10f.

If it was one of the controllers 10b, 10c, 10d, which device timer for sending the table hash had expired first, the controllers 10a, 10e, 10f would start a conflict resolution. As the entries with a later timestamp "win", the resulting situation of the authentication tables 22 would be equivalent.

In the end, after step 138, all authentication tables 22 of all controllers 10a to 10f are updated.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefmite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for synchronizing user authentication data (22) in an industrial control system (26), the method comprising the steps of:
calculating a first hash of user authentication data (22) stored in a first controller (10a);
broadcasting the first hash to a plurality of second controllers (10a to 10f);
comparing the first hash with a second hash of user authentication data (22) stored in a second controller (10b);
updating, in case the first hash differs from the second hash, and in case the user authentication data (22) stored in the second controller (10b) has an earlier timestamp than the user authentication data (22) stored in the first controller (10a), the user authentication data (22) stored in the second controller (10b) with the user authentication data (22) stored in the first controller (10a).

2. The method of claim 1;
wherein the user authentication data (22) comprises at least one user account (23) stored in an authentication table (22);
wherein the first and second hashes are hashes of the authentication table (22).

3. The method of claim 2,
wherein a hash of each user account (23) in the authentication table (22) is calculated;
wherein a modified user account is determined by comparing hashes of user accounts.

4. The method of one of the preceding claims, further comprising:
verifying the identity of the first controller (10a) in the second controller (10b) with a device certificate (16) stored in the first controller (10a) that is sent to the second controller (10b).

5. The method of one of the preceding claims,
wherein the first hash is broadcast after the expiry of a timer in the first controller (10a);
wherein a timer in a second controller (10b) is reset, when the first hash has been received.

6. The method of one of the preceding claims, further comprising:
broadcasting the first hash after a modification of user authentication data (22).

7. The method of one of the preceding claims, further comprising:
retrieving, by the second controller (10b), user authentication data (22) from the first controller (10a), when the second controller (10b) is connected to the industrial control system (26) for the first time;
storing the retrieved user authentication data (22) in the second controller (10b).

8. A computer program for synchronizing user authentication data (22) in an industrial control system (26), which, when being executed by a processor (13), is adapted to carry out the steps of the method of one of claims 1 to 7.

9. A computer-readable medium (12), in which a computer program according to claim 8 is stored.

10. A controller (10a) of an industrial control system,
wherein the controller (10a) is adapted for calculating a first hash of user authentication data (22) stored at the controller (10a);
wherein the controller (10a) is adapted for receiving a broadcasted second hash of user authentication data (22) stored at a second controller (10b) ;
wherein the controller (10a) is adapted for comparing the first hash with the second hash;
wherein the controller (10a) is adapted for updating the user authentication data (22) stored at the controller (10a) with the user authentication data (22) stored at the second controller (10b), in case the first hash differs from the second hash, and when a timestamp of the user authentication data of the controller (10a) is earlier than a timestamp of the user authentication data of the second controller (10b).

11. The controller (10a) of claim 10,
wherein the controller (10a) is adapted for notifying the second controller (10b) to update the user authentication data (22) of the second controller (10b), when the timestamp of the user authentication data (22) of the second controller (10b) is earlier than the timestamp of the user authentication data (22) of the controller (10a).

12. The controller (10a) of claim 10 or 11,
wherein a device certificate (16) for verifying an identity of the controller (10a) is stored in the controller (10a); and/or
wherein a root certificate (20) for verifying certificates of other controllers are stored in the controller (10a).

13. An industrial control system (26), comprising:
a plurality of controllers (10a to 10f) according to one of the claims 10 to 13;
a communication network (30) interconnecting the plurality of controllers.

## Patentansprüche

1. Verfahren zum Synchronisieren von Anwenderauthentifizierungsdaten (22) in einem Industriesteuersystem (26), wobei das Verfahren die folgenden Schritte umfasst:
Berechnen eines ersten Hash-Werts von Anwenderauthentifizierungsdaten (22), die in einer ersten Steuereinheit (10a) gespeichert sind,
Rundsenden des ersten Hash-Werts zu mehreren zweiten Steuereinheiten (10a bis 10f);
Vergleichen des ersten Hash-Werts mit einem zweiten Hash-Wert der Anwenderauthentifizierungsdaten (22), die in einer zweiten Steuereinheit (10b) gespeichert sind;
Aktualisieren, falls sich der erste Hash-Wert von dem zweiten Hash-Wert unterscheidet und falls die Anwenderauthentifizierungsdaten (22), die in der zweiten Steuereinheit (10b) gespeichert sind, einen früheren Zeitstempel aufweisen als die Anwenderauthentifizierungsdaten (22), die in der ersten Steuereinheit (10a) gespeichert sind, der Anwenderauthentifizierungsdaten (22), die in der zweiten Steuereinheit (10b) gespeichert sind, mit den Anwenderauthentifizierungsdaten (22), die in der ersten Steuereinheit (10a) gespeichert sind.

2. Verfahren nach Anspruch 1,
wobei die Anwenderauthentifizierungsdaten (22) wenigstens ein Anwenderkonto (23), das in einer Authentifizierungstabelle (22) gespeichert ist, umfassen;
wobei der erste und der zweite Hash-Wert Hash-Werte der Authentifizierungstabelle (22) sind.

3. Verfahren nach Anspruch 2,
wobei ein Hash-Wert jedes Anwenderkontos (23) in der Authentifizierungstabelle (22) berechnet wird;
wobei ein modifiziertes Anwenderkonto durch Vergleichen von Hash-Werten von Anwenderkonten bestimmt wird.

4. Verfahren nach einem der vorhergehenden Ansprüche, das ferner Folgendes umfasst:
Verifizieren der Identität der ersten Steuereinheit (10a) und der zweiten Steuereinheit (10b) mit einem Gerätezertifikat (16), das in der ersten Steuereinheit (10a) gespeichert ist und das zu der zweiten Steuereinheit (10b) gesendet wird.

5. Verfahren nach einem der vorhergehenden Ansprüche,
wobei der erste Hash-Wert nach dem Ablauf eines Zeitgebers in der ersten Steuereinheit (10a) rundgesendet wird;
wobei ein Zeitgeber in einer zweiten Steuereinheit (10b) zurückgesetzt wird, wenn der erste Hash-Wert empfangen worden ist.

6. Verfahren nach einem der vorhergehenden Ansprüche, das ferner Folgendes umfasst:
Rundsenden des ersten Hash-Werts nach einer Modifikation von Anwenderauthentifizierungsdaten (22).

7. Verfahren nach einem der vorhergehenden Ansprüche, das ferner Folgendes umfasst:
Abrufen von Anwenderauthentifizierungsdaten (22) durch die zweite Steuereinheit (10b) von der ersten Steuereinheit (10a), wenn die zweite Steuereinheit (10b) zum ersten Mal mit dem Industriesteuersystem (26) verbunden wird;
Speichern der abgerufenen Anwenderauthentifizierungsdaten (22) in der zweiten Steuereinheit (10b).

8. Computerprogramm zum Synchronisieren von Anwenderauthentifizierungsdaten (22) in einem Industriesteuersystem (26), das dann, wenn es durch einen Prozessor (13) ausgeführt wird, ausgelegt ist, die Schritte des Verfahrens nach einem der Ansprüche 1 bis 7 durchzuführen.

9. Computerlesbares Medium (12), in dem ein Computerprogramm nach Anspruch 8 gespeichert ist.

10. Steuereinheit (10a) eines Industriesteuersystems,
wobei die Steuereinheit (10a) zum Berechnen eines ersten Hash-Werts von Anwenderauthentifizierungsdaten (22), die in der Steuereinheit (10a) gespeichert sind, ausgelegt ist;
wobei die Steuereinheit (10a) zum Empfangen eines rundgesendeten zweiten Hash-Werts von Anwenderauthentifizierungsdaten (22), die in einer zweiten Steuereinheit (10b) gespeichert sind, ausgelegt ist;
wobei die Steuereinheit (10a) zum Vergleichen des ersten Hash-Werts mit dem zweiten Hash-Wert ausgelegt ist;
wobei die Steuereinheit (10a) zum Aktualisieren der Anwenderauthentifizierungsdaten (22), die in der Steuereinheit (10a) gespeichert sind, mit den Anwenderauthentifizierungsdaten (22), die in der zweiten Steuereinheit (10b) gespeichert sind, in dem Fall, dass sich der erste Hash-Wert von dem zweiten Hash-Wert unterscheidet und wenn ein Zeitstempel der Anwenderauthentifizierungsdaten der Steuereinheit (10a) früher ist als ein Zeitstempel der Anwenderauthentifizierungsdaten der zweiten Steuereinheit (10b), ausgelegt ist.

11. Steuereinheit (10a) nach Anspruch 10,
wobei die Steuereinheit (10a) ausgelegt ist, der zweiten Steuereinheit (10b) zu melden, die Anwenderauthentifizierungsdaten (22) der zweiten Steuereinheit (10b) zu aktualisieren, wenn der Zeitstempel der Anwenderauthentifizierungsdaten (22) der zweiten Steuereinheit (10b) früher ist als der Zeitstempel der Anwenderauthentifizierungsdaten (22) der Steuereinheit (10a).

12. Steuereinheit (10a) nach Anspruch 10 oder 11,
wobei ein Gerätezertifikat (16) zum Verifizieren einer Identität der Steuereinheit (10a) in der Steuereinheit (10a) gespeichert ist; und/oder
wobei ein Wurzelzertifikat (20) zum Verifizieren von Zertifikaten anderer Steuereinheiten in der Steuereinheit (10a) gespeichert ist.

13. Industriesteuersystem (26), das Folgendes umfasst:
mehrere Steuereinheiten (10a bis 10f) nach einem der Ansprüche 10 bis 13;
ein Kommunikationsnetz (30), das die mehreren Steuereinheiten miteinander verbindet.

## Revendications

1. Procédé de synchronisation de données d'authentification d'utilisateur (22) dans un système de commande industriel (26), lequel procédé comprend les étapes consistant à :
calculer un premier hachage de données d'authentification d'utilisateur (22) stockées dans une première unité de commande (10a) ;
diffuser le premier hachage vers plusieurs secondes unités de commande (10a à 10f) ;
comparer le premier hachage à un second hachage de données d'authentification d'utilisateur (22) stockées dans une seconde unité de commande (10b) ;
dans le cas où le premier hachage diffère du second hachage et dans le cas où les données d'authentification d'utilisateur (22) stockées dans la seconde unité de commande (10b) ont un horodatage antérieur à celui des données d'authentification d'utilisateur (22) stockées dans la première unité de commande (10a), mettre à jour les données d'authentification d'utilisateur (22) stockées dans la seconde unité de commande (10b) avec les données d'authentification d'utilisateur (22) stockées dans la première unité de commande (10a).

2. Procédé selon la revendication 1,
dans lequel les données d'authentification d'utilisateur (22) comprennent au moins un compte d'utilisateur (23) stocké dans une table d'authentification (22) ;
dans lequel les premier et second hachages sont des hachages de la table d'authentification (22).

3. Procédé selon la revendication 2,
dans lequel un hachage de chaque compte d'utilisateur (23) dans la table d'authentification (22) est calculé ;
dans lequel un compte d'utilisateur modifié est déterminé en comparant les hachages de comptes d'utilisateur.

4. Procédé selon l'une des revendications précédentes, consistant en outre à :
vérifier l'identité de la première unité de commande (10a) dans la seconde unité de commande (10b) avec un certificat de dispositif (16) stocké dans la première unité de commande (10a) qui est envoyé à la seconde unité de commande (10b).

5. Procédé selon l'une des revendications précédentes,
dans lequel le premier hachage est diffusé après l'expiration d'un minuteur dans la première unité de commande (10a) ;
dans lequel un minuteur dans une seconde unité de commande (10b) est réinitialisé lorsque le premier hachage a été reçu.

6. Procédé selon l'une des revendications précédentes, consistant en outre à :
diffuser le premier hachage après une modification des données d'authentification d'utilisateur (22).

7. Procédé selon l'une des revendications précédentes, consistant en outre à :
extraire, à l'aide de la seconde unité de commande (10b), des données d'authentification d'utilisateur (22) depuis la première unité de commande (10a) lorsque la seconde unité de commande (10b) est connectée au système de commande industriel (26) pour la première fois ;
stocker les données d'authentification d'utilisateur (22) extraites dans la seconde unité de commande (10b).

8. Programme informatique pour synchroniser des données d'authentification d'utilisateur (22) dans un système de commande industriel (26) qui, lorsqu'il est exécuté par un processeur (13), est conçu pour effectuer les étapes du procédé selon l'une des revendications 1 à 7.

9. Support lisible par ordinateur (12) dans lequel est stocké un programme informatique selon la revendication 8.

10. Unité de commande (10a) d'un système de commande industriel,
laquelle unité de commande (10a) est conçue pour calculer un premier hachage de données d'authentification d'utilisateur (22) stockées dans l'unité de commande (10a) ;
laquelle unité de commande (10a) est conçue pour recevoir un second hachage diffusé de données d'authentification d'utilisateur (22) stockées dans une seconde unité de commande (10b) ;
laquelle unité de commande (10a) est conçue pour comparer le premier hachage au second hachage ;
laquelle unité de commande (10a) est conçue pour mettre à jour les données d'authentification d'utilisateur (22) stockées dans l'unité de commande (10a) avec les données d'authentification d'utilisateur (22) stockées dans la seconde unité de commande (10b) dans le cas où le premier hachage diffère du second hachage et lorsqu'un horodatage des données d'authentification d'utilisateur de l'unité de commande (10a) est antérieur à un horodatage des données d'authentification d'utilisateur de la seconde unité de commande (10b).

11. Unité de commande (10a) selon la revendication 10, laquelle unité de commande (10a) est conçue pour indiquer à la seconde unité de commande (10b) de mettre à jour les données d'authentification d'utilisateur (22) de la seconde unité de commande (10b) lorsque l'horodatage des données d'authentification d'utilisateur (22) de la seconde unité de commande (10b) est antérieur à l'horodatage des données d'authentification d'utilisateur (22) de l'unité de commande (10a).

12. Unité de commande (10a) selon les revendications 10 ou 11,
dans laquelle un certificat de dispositif (16) pour vérifier une identité de l'unité de commande (10a) est stocké dans l'unité de commande (10a) ; et/ou
dans laquelle un certificat racine (20) pour vérifier des certificats d'autres unités de commande est stocké dans l'unité de commande (10a).

13. Système de commande industriel (26) comprenant :
plusieurs unités de commande (10a à 10f) selon l'une des revendications 10 à 13 ;
un réseau de communication (30) interconnectant lesdites plusieurs unités de commande.
